# EUROPÄISCHE PATENTSCHRIFT

(11) **EP 4 536 539 B1**
(45) Veröffentlichungstag und Bekanntmachung des Hinweises auf die Patenterteilung: **15.04.2026**
(21) Anmeldenummer: 23730795.4
(22) Anmeldetag: 05.06.2023
(51) Int. Cl.: B62D 33/06

(54) **KABINENLAGERUNG UND VERFAHREN ZUR STEUERUNG DER KABINENLAGERUNG**
CAB MOUNTING SYSTEM AND METHOD FOR CONTROLLING THE CAB MOUNTING SYSTEM
SYSTÈME DE MONTAGE DE CABINE ET PROCÉDÉ DE COMMANDE DU SYSTÈME DE MONTAGE DE CABINE

(30) Priorität: 09.06.2022 DE 102022205861
(43) Veröffentlichungstag der Anmeldung: 16.04.2025
(73) Patentinhaber: ZF Friedrichshafen AG, 88046 Friedrichshafen (DE)
(72) Erfinder: BEHNER, Manuel, 83661 Lenggries (DE); MEMMEL, Alfred, 97453 Schonungen (DE); VIRNEKÄS, Matthias, 96173 Oberhaid (DE)
(74) Vertreter: ZF Friedrichshafen AG
(86) Internationale Anmeldenummer: PCT/EP2023/064920
(87) Internationale Veröffentlichungsnummer: WO 2023/237465

(56) Entgegenhaltungen:
- EP-A2- 1 584 545
- DE-A1- 102015 205 045
- US-A1- 2011 089 658

## Beschreibung

Die Erfindung betrifft eine Kabinenlagerung gemäß dem Oberbegriff von Patentanspruch 1.

Die EP 1 584 545 B1 beschreibt eine Kabinenlagerung für ein Nutzfahrzeug, wobei die Kabinenlagerung u. a. auf den Komfortaspekt bei Stillstand des Fahrzeugs optimiert ist. Es soll erreicht werden, dass die Kabine bei Fahrzeugstillstand horizontal steht und die Position auch bei äußerer Anregung des Fahrzeugs beibehalten wird. Als äußere Anregung wird z. B. ein Windstoß eines vorbeifahrenden Fahrzeugs genannt. Für die Horizontierung dienen Luftfedern mit variablen Volumen.

Die horizontale Lage der Kabine wird durch verstellbare Luftfedern erreicht, die sich individuell befüllen lassen. Zur Fixierung der eingestellten horizontalen Lage der Kabine dienen verstellbare Schwingungsdämpfer, die auf eine harte Dämpfkrafteinstellung eingestellt werden. Zusätzlich kann auch eine mechanische Verriegelung der Fahrzeugkabine vorgesehen sein. Des Weiteren verfügt die Kabinenlagerung über einen passiven Stabilisator, der für den Fahrbetrieb des Nutzfahrzeugs ausgelegt ist.

Moderne verstellbare Schwingungsdämpfer sind so ausgelegt, dass eine komfortable Dämpfkrafteinstellung mit einem geringen Energieeinsatz eines Aktuators für das mindestens eine verstellbare Dämpfventil verbunden ist. Es hat sich gezeigt, dass überwiegend im Komfortbereich des Schwingungsdämpfers gefahren wird und eine harte Dämpfkrafteinstellung nur bei kritischen Fahrsituationen notwendig ist. Der Vorteil der Kombination geringe Dämpfkraft/geringe Aktuatorenergie führt zu einem geringen Energieeinsatz. Wenn jedoch die Schwingungsdämpfer zur Blockade der Kabine verwendet wird, dann muss bei Stillstand des Fahrzeugs der Aktuator permanent als elektrischer Verbraucher gespeist werden.

Ein weiterer Nachteil einer Abstützung der Kabine mittels verstellbarer Schwingungsdämpfer besteht darin, dass bei einer niederfrequenten Anregung trotz einer harten Dämpfkrafteinstellung nur eine geringe Dämpfkraft erzielt wird. Dieses Betriebsverhalten ist bei einem Schwingungsdämpfer bezogen auf seine originäre Funktion wünschenswert. Im Rahmen einer angestrebten Blockierfunktion kann u. U. nicht der erwünschte Stabilisierungseffekt erzielt werden.

Die Aufgabe der vorliegenden Erfindung besteht darin, eine Kabinenlagerung und eine Steuerung dafür zu realisieren, bei der die aus dem Stand der Technik bekannten Nachteile zumindest minimiert sind.

Die Aufgabe wird dadurch gelöst, dass der Stabilisator zumindest zwei Schaltstufen mit unterschiedlichen Federraten aufweist und der Stabilisator im Standbetrieb des Fahrzeugs bei horizontierter Kabine die höhere der mindestens zwei Federraten aufweist.

Der große Vorteil der Erfindung besteht darin, dass mit dem Stabilisator eine sehr gute Stabilisierung der Kabine erreicht werden kann. Des Weiteren wird durch den verstellbaren Stabilisator ein Komfortgewinn für den Fahrbetrieb erzielt. Dabei kann der Stabilisator aktiv betrieben werden, d. h. der Stabilisator kann über einen Energieeinsatz ein veränderbares Stützmoment erzeugen oder der Stabilisator ist z. B. mechanisch über eine Kupplung schaltbar.

Bevorzug ist der Stabilisator in einer Betriebsstellung kraftfrei bezogen auf die Kabine geschaltet, um die Horizontierung der Kabine mit einem möglichst geringen Energieeinsatz durchzuführen.

Bevorzugt weisen die Aktuatoren jeweils einen Stützanschlag auf, der bei deaktiviertem Aktuator die Kabine trägt. Der Stützanschlag kann z. B. von einem Schwingungsdämpfer gebildet werden, der dem Aktuator parallelgeschaltet ist. Alternativ kann der Aktuator, der z. B. als eine Luftfeder einen Anschlagpuffer aufweisen, damit der Luftfederbalg der Luftfeder geschützt wird.

Zusätzlich kann vorgesehen sein, dass der die Kabine tragende Fahrzeugrahmen zumindest mittelbar mit willkürlich aktivierbaren Stützen in Wirkverbindung steht. Viele Fahrzeuge haben zumindest an der Vorderachse eine Luftfederung, die man für eine Stabilisierung des Fahrzeugrahmens entlüften könnte. Vor einer Weiterfahrt müssten die Luftfedern wieder mit der notwendigen Luftmasse gefüllt werden. Bei einer separaten mit dem Rahmen mittelbar verbundenen Stütze müsste nur der Hubweg der Stütze zwischen Stützposition und Fahrposition als Energieeintrag geleistet werden.

Insbesondere Fahrzeuge, die im Fernverkehr eingesetzt werden und für die die Funktion der Horizontierung ein wesentliches Komfortmerkmal für den Fahrer darstellt, verfügen über ein sogenanntes Wechselbrückensystem, bei dem der Fahrzeugaufbau von dem Fahrzeug entkoppelt und abgestellt werden kann, bis eine neue Fahrt beginnt. Diese Fahrzeugaufbau verfügen grundsätzlich über Stützen, über die der Fahrzeugrahmen zum Fahrzeuguntergrund fixiert werden kann. Dadurch kann die Federung des Fahrzeugrahmens indirekt verhindert werden. Auch Kranfahrzeuge oder Transporter für Wechselmulden verfügen über rahmenseitige Stütze, die für die Abstützung während der Fahrpause zur Stabilisierung der Kabine genutzt werden können.

Des Weiteren enthält die Lösung ein Verfahren, bei dem die momentane Winkelausrichtung der Kabine erfasst wird und der Stabilisator auf seine minimale Federrate eingestellt wird, wobei die Stützkraft der Aktuatoren so weit reduziert wird, bis einer der Aktuatoren aufgrund der Traglast der Kabine eine minimale Stützlänge aufweist und die Kabine bei Erreichen dieser Stützlänge des einen Aktuators über die Ansteuerung der weiteren Aktuatoren horizontal zu einer Bezugsebene ausgerichtet wird, wobei die Kabine in der horizontierten Betriebsstellung über die Verstellung des Stabilisators auf eine maximale Federrate gesichert wird.

Das gesamte Verfahren kann mit einem geringen Energieeinsatz durchgeführt werden. Für die Horizontierung der Kabine ist der absolute Abstand zum Fahrzeugrahmen oder zum Untergrund des Fahrzeugs unerheblich. Der von allen Aktuatoren, insbesondere Luftfedern, zuerst erreichte untere Abstützpunkt bildet den Abstützpunkt für die gesamte Ebene, die bei der Horizontierung eingestellt werden soll.

Als zusätzliche Maßnahme zur Stabilisierung ist vorgesehen, dass die Stützen das Fahrzeug vor Beginn der Ausrichtung der Kabine rahmenseitig fixieren.

Des Weiteren kann man bei einem Fahrzeug mit verstellbarer Federung eine Verstellung der Federung zur Unterstützung der Horizontierung der Kabine durchführen. Damit kann man den Verstellbereich für die Horizontierung deutlich steigern, wobei eine Vorrangschaltung für die Aktuatoren der Kabinenlagerung sinnvoll ist, um den Energieeinsatz zu optimieren, denn die Kabine ist leichter als das Gesamtfahrzeug oder auch nur eine Fahrzeughälfte.

Anhand der folgenden Figurenbeschreibung soll die Erfindung näher erläutert werden.

Es zeigt:
Fig. 1 Prinzipdarstellung einer Fahrzeugkabine
Fig. 2 Kabinenlagerung nach Fig. 1 im Detail
Fig. 3 Aktuator nach Fig. 2 im Schnitt
Fig. 4 Fahrzeug nach Fig. 1 mit Stützen
Fig. 5 Schaltplan zur Fig. 1

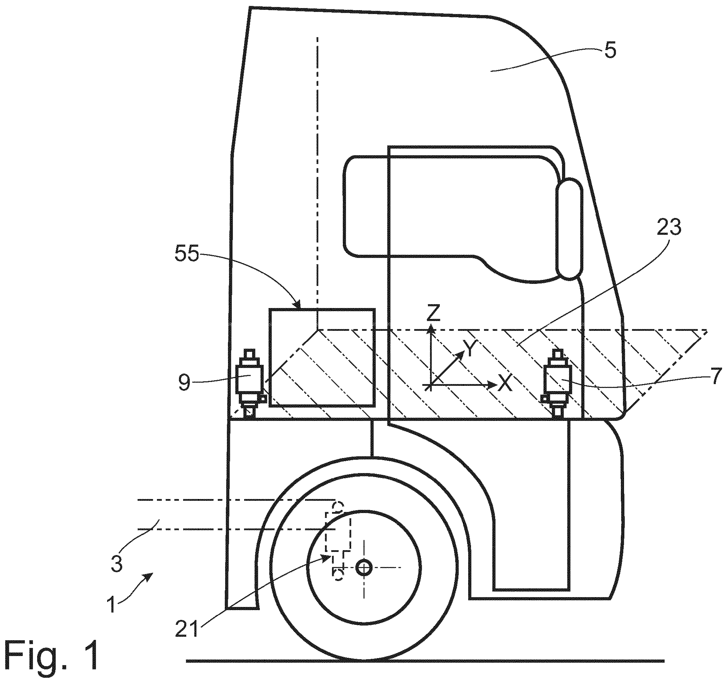

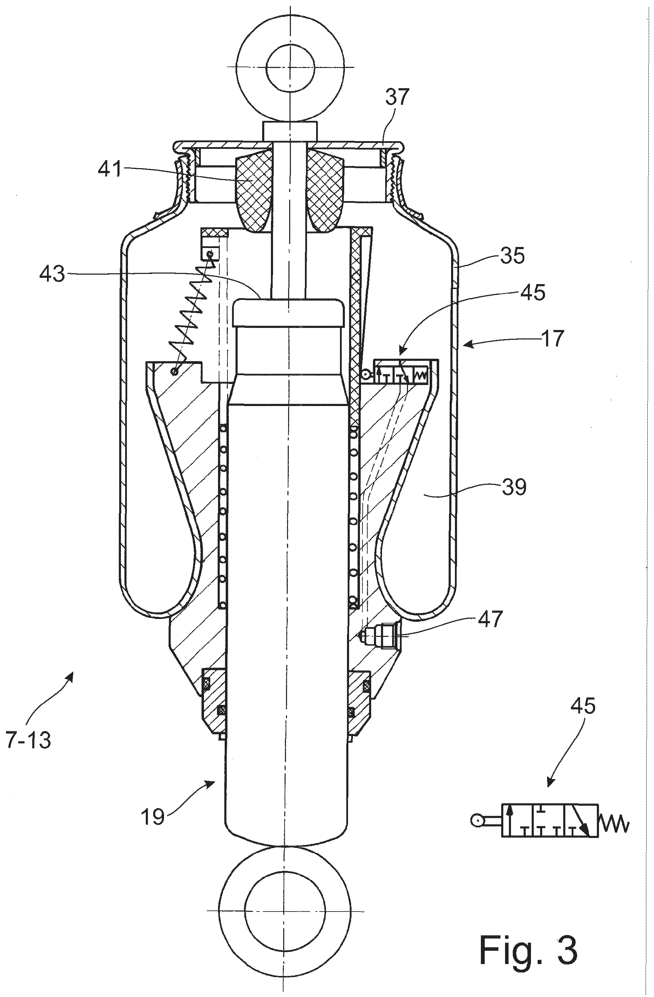

Die Figur 1 zeigt stark vereinfacht ein Nutzfahrzeug 1 mit einer zu einem Fahrzeugrahmen 3 separaten Kabine 5. Die Kabine 5 ist mittels mindestens drei verstellbarer Aktuatoren 7 - 13 zu einer Fahrzeugstandfläche 15 nivellierbar gelagert ist. Die Aktuatoren 7 - 13 sind bevorzugt als Luftfeder 17 in Kombination mit einem Schwingungsdämpfer 19 ausgeführt. Beispielhaft dargestellt in Fig. 3, ist ein derartiger Aktuator aus der DE 102 00 553 C1 bekannt. Der Fahrzeugrahmen 3 stützt sich wiederum über Tragelemente als Bestandteil eines nicht näher detaillierten Fahrwerks auf einem Untergrund ab. Die Tragelemente 21 können prinzipiell einen identischen Aufbau aufweisen wie die Aktuatoren, ggf. angepasst an eine höhere Traglast.

Im Fahrbetrieb dienen die Aktuatoren 7 - 13 zur Abstützung der Kabine 3 mit dem Ziel eine Niveaulage möglichst einzuhalten, z. B. bei Kurvenfahrt oder Bremsvorgängen. Vielfach ist die Kabine 3 auch mit einem Ruhebereich ausgestattet, bei dem insbesondere bei einem längeren Fahrzeugstillstand eine möglichst horizontale Ebene 23 angestrebt wird. Der Ruhebereich soll dabei stabil gelagert sein, d. h. frei von Schwingungen, die durch äußere Anregungen verursacht werden. In der Fig. 1 ist diese Ebene schraffiert dargestellt.

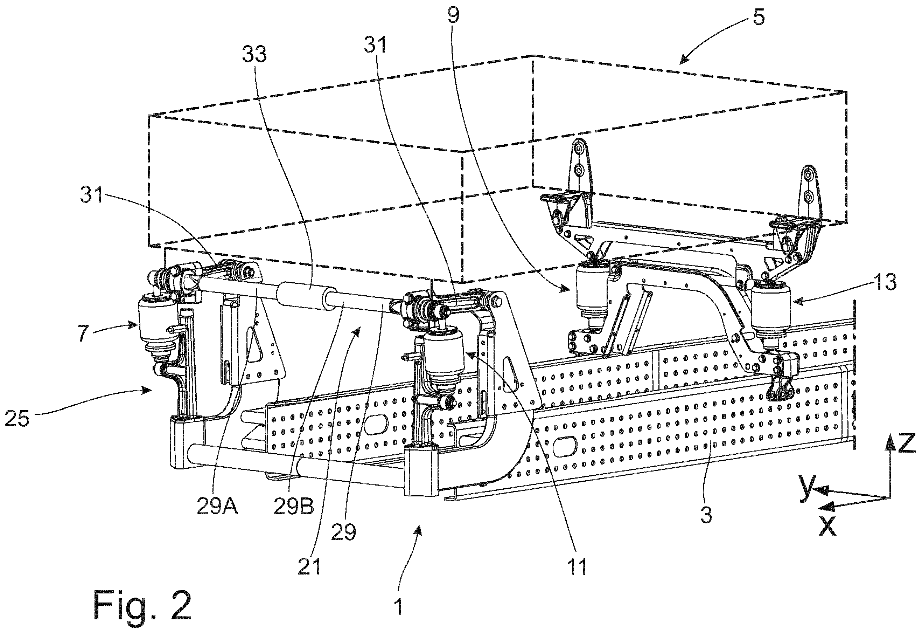

Neben den Aktuatoren 7 - 13 verfügt eine Kabinenlagerung 25 für die Abstützung von Wankbewegungen der Kabine 5 während des Fahrbetriebs über mindestens einen Stabilisator 27. (s. Fig. 2) Der Stabilisator 27 ist in diesem Fall als Torsionsstab 29 mit zwei abgewinkelten Biegestäben 31 ausgeführt. Die Biegestäbe 31 stützten sich zumindest mittelbar an dem Fahrzeugrahmen 3 ab. In dieser Darstellung ist der Torsionsstab zweigeteilt, wobei zwischen Stababschnitten 29A; 29B eine schaltbare Kupplung 33 angeordnet ist. Dadurch weist der Stabilisator zumindest zwei Schaltstufen mit unterschiedlichen Federraten auf. Eine Federrate kann z. B. 0 Nm/° bei offener Kupplung sein und eine zweite Federrate entspricht der passiven Federrate des Stabilisators bei geschlossener Kupplung. Die Kupplung kann als schaltbares Verbindungselement zwischen den beiden Stababschnitten 29A; 29B ausgeführt werden. Man kann jedoch auch einen Schwenkmotor vorsehen, der mit einem Energieerzeugungssystem, z. B. einem Hydrauliksystem verbunden ist, über das aktiv ein Stellmoment auf die Kabine 5 eingeleitet werden kann.

Alternativ kann man anstelle eines geteilten Torsionsstabs 29 einen konventionellen Torsionsstab mit einem schaltbaren Biegestab verwenden, z. B. mit einem hydraulischen Kolben-Zylinderaggregat, das wiederum als passives Element mit einem schaltbaren Blockventil oder als aktives Element als ein Hydraulikzylinder ausgeführt sein kann.

Unabhängig von der konstruktiven Ausgestaltung des Stabilisators 27 weist dieser mindestens zwei Federraten auf, z. B. eine niedrige Federrate bei offener Kupplung 33 und eine hohe Federrate bei geschlossener Kupplung. Mit einem Schwenkmotor oder einem Hydraulikzylinder sind natürlich auch Zwischeneinstellungen möglich.

Zusätzlich ist vorgesehen, dass der Stabilisator 27 im Standbetrieb des Fahrzeugs 1 bei horizontierter Kabine 5 die höhere der mindestens zwei Federraten aufweist. Damit sorgt der Stabilisator 27 für eine ausreichende Stabilisierung der Kabine gegen äußere Einflüsse, wie z. B. Seitenwind bei stehendem Fahrzeug. Für die Einstellung der höheren Federrate ist kein besondere Energieeintrag notwendig. So kann z. B. bei einem Schwenkmotor die Verbindung zum Hydrauliksystem mit einem Ventil blockiert werden.

Zur Justierung der horizontalen Lage der Kabine 5 ist der Stabilisator 27 kraftfrei bezogen auf die Kabine geschaltet. Wenn die Aktuatoren 7 - 13 in ihrer Haltekraft zurückgenommen werden, dann kann sich die Kabine 5 aufgrund ihres Eigengewichts absenken, ohne dass der Stabilisator 27 eine relevante Gegenkraft aufbaut.

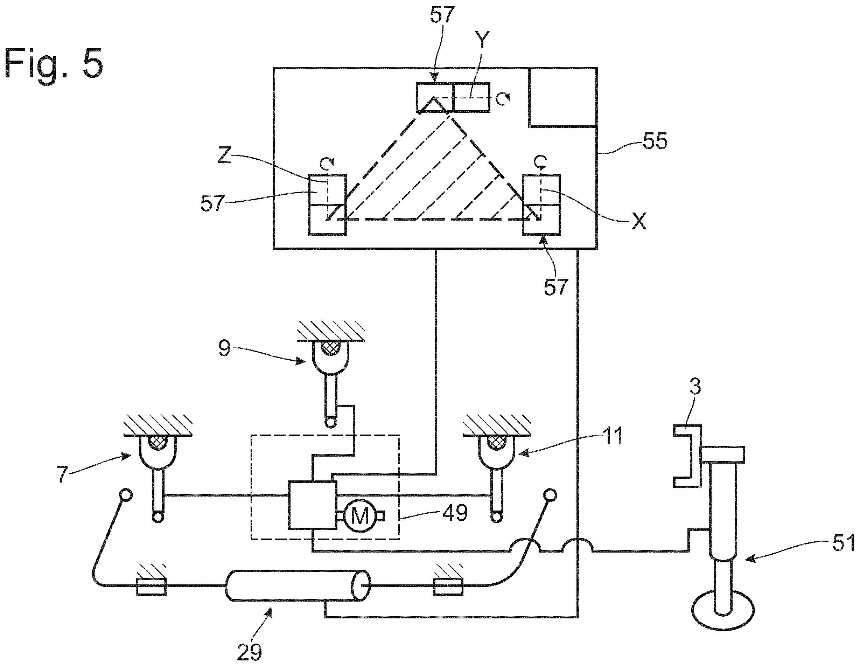

In der Fig. 3 ist einer der Aktuatoren 7 - 13 in einer beispielhaften Ausgestaltung dargestellt. Innerhalb eines von einem Rollbalg 35 und einem Deckel 37 begrenzten Federraums 39 ist ein Anschlagpuffer als Stützanschlag 41 angeordnet, der bei minimaler Stützlänge des Aktuators 7 - 13 auf einer Stirnfläche 43 des Schwingungsdämpfers 19 zur Anlage kommt. Damit trägt der Stützanschlag 49 bei deaktiviertem Aktuator die Kabine 5. Bei diesem Aktuator 7 - 13 ist die für den Betrieb des Aktuators notwendige Ventiltechnik 45 Bestandteil des Aktuators, wobei diese Bauform für die Nutzung der Erfindung nicht zwingend erforderlich ist. Erkennbar ist auch der Anschluss 47 des Aktuators an ein aktives Druckmittelversorgungssystem 49, z. B. einer Druckluftversorgung für die Luftfeder 17 s. Fig. 5.

Wie bereits offenbart, kann auch das Fahrwerk mit einem derartigen Aktuator ausgerüstet sein, so dass auch das Fahrwerk und damit der Gesamtaufbau des Fahrzeugs stabilisierbar sind.

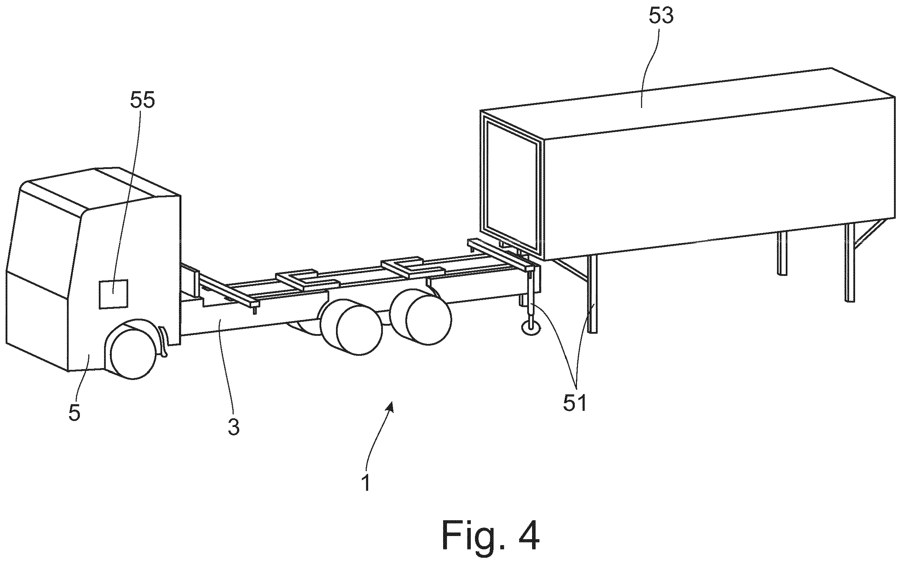

In der Fig. 4 ist das Gesamtfahrzeug 1 vereinfacht dargestellt. Sollte das Fahrzeug nicht über das Fahrwerk stabilisiert werden, so kann der Fahrzeugrahmen 3 zumindest mittelbar mit willkürlich aktivierbaren Stützen 51 in Wirkverbindung stehen. Alternativ können die Stützen 51 auch Bestandteil eines Fahrzeugaufbaus 53 sein. Bei einem Fahrzeug mit einem Wechselaufbau sind Stützen 51 grundsätzlich vorgesehen. Über die Verbindung zwischen dem Fahrzeugaufbau 53 und dem Fahrzeugrahmen 3 wird die Stützfunktion der Stützen 51 des Fahrzeugaufbaus auf das Gesamtfahrzeug übertragen.

Die Fig. 5 zeigt die Verbindung eines Steuergeräts 55 für die Durchführung eines Verfahrens zur Steuerung der Kabinenlagerung 25. Das Steuergerät 55 verarbeitet Signale, die die absolute momentane Ausrichtung der Kabine 5, d. h. losgelöst von dem Untergrund und der Rahmenposition beschreiben. Dazu können z. B. drei separate Lagesensoren 57 verwendet werden, z. B. Beschleunigungssensoren, Wegsensoren oder auch Winkelsensoren. Die Sensoren können Bestandteile des Steuergeräts 55 oder auch Bestandteil des Aktuators 7 - 13 sein. Denkbar ist auch ein gyroskopischer Sensor, der alle drei Winkelsignale bereitstellen kann.

Mit der Initiierung der Horizontierung der Kabine 5 für den Fahrzeugstillstand wird die momentane Winkelausrichtung der Kabine 5 erfasst. Der Stabilisator 27 wird auf seine minimale Federrate eingestellt. Die Stützkraft der Aktuatoren 7 - 13 wird reduziert, bis eine horizontale Lage der Kabine 5 erreicht ist. Danach wird die Stützkraft für alle Aktuatoren 7 - 13 so weit reduziert, bis einer der Aktuatoren aufgrund der Traglast der Kabine 5 eine minimale Stützlänge aufweist, d. h. der Stützanschlag 41 wird wirksam. Bei einer vorausgehende Horizontierung ist sichergestellt, dass keine größere Energiemenge zugeführt werden muss, um die Kabine zu horizontieren. Bei Erreichen dieser Stützlänge des einen Aktuators, z.B. Aktuator 7, wird die über die Ansteuerung der weiteren Aktuatoren 9 - 13 horizontal zu einer Bezugsebene exakt ausgerichtet. Die Kabine 5 wird dann in dieser horizontierten Betriebsstellung über die Verstellung des Stabilisators 27 auf eine maximale Federrate gesichert.

Zusätzlich kann man vorsehen, dass die Stützen 51 das Fahrzeug 1 vor Beginn der Ausrichtung der Kabine 5 rahmenseitig fixieren. Damit hat man eine stabile Ausgangssituation für die Durchführung des Verfahrens erzeugt. Grundsätzlich könnte man die Stützen auch nach der Horizontierung der Kabine einsetzen. Mit dem Absenken könnte sich die Ausrichtung des Rahmens zum Untergrund auch verändern und damit die Federkräfte innerhalb des Fahrwerks verändern. Bei einem Fahrzeug mit einer verstellbaren Luftfederung im Fahrzeug würde man einen Fahrwerkszustand einnehmen, der bei Fortsetzung der Fahrt wieder korrigiert werden müsste, da dann die Kabine 5 wieder etwas angehoben wird, um einen Federweg innerhalb der Kabinenlagerung zur Verfügung zu haben. Dieser Regelvorgang entfällt bei einer frühzeitigen Blockade des Fahrzeugrahmens 3.

Bei extremen Randbedingungen, z. B. wenn der Fahrzeuguntergrund so schief ist, dass der Verstellbereich der Aktuatoren 7 - 13 der Kabinenlagerung 25 für eine Horizontierung nicht ausreicht, kann bei einem Fahrzeug mit verstellbaren Tragelementen 21 eine Verstellung der Federung zur Unterstützung der Horizontierung der Kabine 5 durchgeführt werden.

### Bezugszeichen

- 1: Nutzfahrzeug
- 3: Fahrzeugrahmen
- 5: Kabine
- 7: Aktuatoren
- 9: Aktuatoren
- 11: Aktuatoren
- 13: Aktuatoren
- 15: Fahrzeugstandfläche
- 17: Luftfeder
- 19: Schwingungsdämpfer
- 21: Tragelement
- 23: Ebene
- 25: Kabinenlagerung
- 27: Stabilisator
- 29: Torsionsstab
- 29A: Stababschnitt
- 29B: Stababschnitt
- 31: Biegestab
- 33: Kupplung
- 35: Rollbalg
- 37: Deckel
- 39: Federraum
- 41: Stützanschlag
- 43: Stirnfläche
- 45: Ventiltechnik
- 47: Anschluss
- 49: Druckmittelversorgungssystem
- 51: Stütze
- 53: Fahrzeugaufbau
- 55: Steuergerät
- 57: Lagesensor

## Patentansprüche

1. Kabinenlagerung (25) für ein Fahrzeug (1) mit einer zu einem Fahrzeugrahmen (3) separaten Kabine (5), wobei die Kabine (5) mittels mindestens drei verstellbarer Aktuatoren (7 - 13) zu einer Fahrzeugstandfläche nivellierbar gelagert ist und eine über die Aktuatoren (7 - 13) eingestellte Niveaulage zumindest bei Fahrzeugstillstand blockierbar ist, wobei die Kabinenlagerung (25) für die Abstützung von Wankbewegungen der Kabine (5) während des Fahrbetriebs mindestens einen Stabilisator (27) aufweist, **dadurch gekennzeichnet, dass** der Stabilisator (27) zumindest zwei Schaltstufen mit unterschiedlichen Federraten aufweist und der Stabilisator (27) im Standbetrieb des Fahrzeugs bei horizontierter Kabine (5) die höhere der mindestens zwei Federraten aufweist.

2. Kabinenlagerung nach Anspruch 1, **dadurch gekennzeichnet, dass** der Stabilisator (27) in einer Betriebsstellung kraftfrei bezogen auf die Kabine (5) geschaltet ist.

3. Kabinenlagerung nach mindestens einem der Ansprüche 1 oder 2, **dadurch gekennzeichnet, dass** die Aktuatoren (7 - 13) jeweils einen Stützanschlag (41) aufweisen, der bei deaktiviertem Aktuator (7 - 13) die Kabine (5) trägt.

4. Kabinenlagerung nach mindestens einem der Ansprüche 1 - 3, **dadurch gekennzeichnet, dass** der Fahrzeugrahmen (3) zumindest mittelbar mit willkürlich aktivierbaren Stützen (51) in Wirkverbindung steht.

5. Kabinenlagerung nach Anspruch 4, **dadurch gekennzeichnet, dass** die Stützen (51) Bestandteil eines Fahrzeugaufbaus (53) sind.

6. Verfahren zur Steuerung der Kabinenlagerung (25) nach Anspruch 1, **dadurch gekennzeichnet, dass** die momentane Winkelausrichtung der Kabine (5) erfasst wird und der Stabilisator (27) auf seine minimale Federrate eingestellt wird, wobei die Stützkraft der Aktuatoren (7 - 13) so weit reduziert wird, bis einer der Aktuatoren (7 - 13) aufgrund der Traglast der Kabine (5) eine minimale Stützlänge aufweist und die Kabine (5) bei Erreichen dieser Stützlänge des einen Aktuators (7 - 13) über die Ansteuerung der weiteren Aktuatoren horizontal zu einer Bezugsebene ausgerichtet wird, wobei die Kabine (5) in der horizontierten Betriebsstellung über die Verstellung des Stabilisators (27) auf eine maximale Federrate gesichert wird.

7. Verfahren nach Anspruch 6, **dadurch gekennzeichnet, dass** die Stützen (51) das Fahrzeug vor Beginn der Ausrichtung der Kabine (5) rahmenseitig fixieren.

8. Verfahren nach mindestens einem der Ansprüche 6 oder 7, **dadurch gekennzeichnet, dass** bei einem Fahrzeug (1) mit verstellbarer Federung eine Verstellung der Federung zur Unterstützung der Horizontierung der Kabine (5) durchgeführt wird.

## Claims

1. Cab mounting system (25) for a vehicle (1) having a cab (5) separate from a vehicle frame (3), wherein the cab (5) is mounted such that it can be levelled in relation to a vehicle standing surface by means of at least three adjustable actuators (7-13), and a ride height that is set by way of the actuators (7-13) can be blocked at least when the vehicle is stationary, wherein the cab mounting system (25) has at least one stabilizer (27) for supporting rolling movements of the cab (5) during driving operation, **characterized in that** the stabilizer (27) has at least two switching stages with different spring rates and the stabilizer (27) has the higher of the at least two spring rates in stationary operation of the vehicle when the cab (5) is horizontal.

2. Cab mounting system according to Claim 1, **characterized in that** the stabilizer (27) is switched to no power with respect to the cab (5) in an operating position.

3. Cab mounting system according to at least one of Claims 1 or 2, **characterized in that** the actuators (7-13) have in each case a supporting stop (41) which bears the cab (5) when the actuators (7-13) are deactivated.

4. Cab mounting system according to at least one of Claims 1-3, **characterized in that** the vehicle frame (3) is at least indirectly operatively connected to arbitrarily activatable supports (51).

5. Cab mounting system according to Claim 4, **characterized in that** the supports (51) are a component part of a vehicle body (53).

6. Method for controlling the cab mounting system (25) according to Claim 1, **characterized in that** the momentary angular orientation of the cab (5) is detected and the stabilizer (27) is set to its minimum spring rate, wherein the supporting force of the actuators (7-13) is reduced until one of the actuators (7-13) has a minimum supporting length due to the bearing load of the cab (5) and, when this supporting length of the one actuator (7-13) is reached, the cab (5) is aligned horizontally in relation to a reference plane by way of the actuation of the further actuators, wherein the cab (5) is secured in the horizontal operating position by way of the adjustment of the stabilizer (27) to a maximum spring rate.

7. Method according to Claim 6, **characterized in that** the supports (51) fix the vehicle on the frame side before the alignment of the cab (5) has begun.

8. Method according to at least one of Claims 6 or 7, **characterized in that**, in the case of a vehicle (1) with adjustable suspension, an adjustment of the suspension is carried out for assisting in the levelling of the cab (5).

## Revendications

1. Système de montage (25) de cabine pour un véhicule (1) avec une cabine (5) séparée d'un châssis (3) de véhicule, la cabine (5) étant montée de manière réglable au moyen d'au moins trois actionneurs (7 - 13) ajustables par rapport à une surface de support de véhicule et une position de niveau réglée par les actionneurs (7 - 13) pouvant être bloquée au moins lorsque le véhicule est à l'arrêt, le système de montage (25) de cabine comportant au moins un stabilisateur (27) pour soutenir des mouvements de roulis de la cabine (5) pendant le mode de conduite, **caractérisé en ce que** le stabilisateur (27) comporte au moins deux étages de commutation avec des taux de flexion différents et le stabilisateur (27) présente le plus élevé des au moins deux taux de flexion lorsque le véhicule est à l'arrêt avec la cabine (5) orientée à l'horizontale.

2. Système de montage de cabine selon la revendication 1, **caractérisé en ce que** le stabilisateur (27), dans une position de fonctionnement, est commuté sans force sur la cabine (5).

3. Système de montage de cabine selon au moins l'une des revendications 1 ou 2, **caractérisé en ce que** les actionneurs (7 - 13) comportent chacun une butée d'appui (41), qui porte la cabine (5) lorsque l'actionneur (7 - 13) est désactivé.

4. Système de montage de cabine selon au moins l'une des revendications 1 à 3, **caractérisé en ce que** le châssis (3) de véhicule est au moins indirectement en liaison fonctionnelle avec des supports (51) pouvant être actionnés arbitrairement.

5. Système de montage de cabine selon la revendication 4, **caractérisé en ce que** les supports (51) font partie intégrante d'une structure (53) de véhicule.

6. Procédé de commande du système de montage (25) de cabine selon la revendication 1, **caractérisé en ce que** l'alignement angulaire instantané de la cabine (5) est détecté et le stabilisateur (27) est réglé sur son taux de flexion minimal, la force d'appui des actionneurs (7 - 13) étant réduite jusqu'à ce que l'un des actionneurs (7 - 13) présente en raison de la capacité de charge de la cabine (5) une longueur de support minimale et la cabine (5) est alignée horizontalement par rapport un plan de référence lorsque cette longueur de support d'un actionneur (7 - 13) est atteinte par le pilotage des autres actionneurs, la cabine (5) étant bloquée dans la position de fonctionnement orientée à l'horizontale par l'ajustement du stabilisateur (27) sur un taux de flexion maximal.

7. Procédé selon la revendication 6, **caractérisé en ce que** les supports (51) fixent le véhicule côté châssis avant le début de l'alignement de la cabine (5).

8. Procédé selon au moins l'une des revendications 6 ou 7, **caractérisé en ce que** dans le cas d'un véhicule (1) à suspension ajustable, un ajustement de la suspension est effectué pour soutenir l'orientation à l'horizontale de la cabine (5).
